**Europäisches Patentamt**

**European Patent Office**

**Office européen des brevets**

(11) Veröffentlichungsnummer : **0 068 298**
**B1**

(12) **EUROPÄISCHE PATENTSCHRIFT**

(45) Veröffentlichungstag der Patentschrift :
05.06.85

(51) Int. Cl.⁴ : **C 08 F 12/08, C 08 F 2/18**

(21) Anmeldenummer : **82105257.8**

(22) Anmeldetag : **16.06.82**

(54) Verfahren zur Herstellung von Styrol-Suspensionspolymerisaten.

(30) Priorität : 27.06.81 DE 3125446

(43) Veröffentlichungstag der Anmeldung :
05.01.83 Patentblatt 83/01

(45) Bekanntmachung des Hinweises auf die Patenterteilung : 05.06.85 Patentblatt 85/23

(84) Benannte Vertragsstaaten :
**BE DE FR GB IT NL**

(56) Entgegenhaltungen :
**FR-A- 1 036 207**

(73) Patentinhaber : **BASF Aktiengesellschaft
Carl-Bosch-Strasse 38
D-6700 Ludwigshafen (DE)**

(72) Erfinder : **Keppler, Hans Georg, Dr.
Gasselweg 2
D-6940 Weinheim (DE)**

**Beschreibung**

Die Erfindung betrifft ein Verfahren zur Herstellung von Styrolpolymerisaten durch Suspensionspolymerisation in Gegenwart von schwerlöslichen Metallphosphaten als Suspensionsstabilisatoren.

Ein geeignetes Verfahren zur Herstellung von Styrolperlpolymerisaten ist die Suspensionspolymerisation, bei der die Monomeren in Form feiner Tröpfen in Wasser suspendiert und bei erhöhter Temperatur in Gegenwart von Initiatoren polymerisiert werden. Bei der technischen Durchführung dieses Verfahrens ist die Verwendung von Suspensionsstabilisatoren erforderlich, um ein Zusammenfließen der polymerisierenden Monomertröpfchen zu verhindern.

Als Suspensionsstabilisatoren werden in der Praxis häufig makromolekulare organische Verbindungen verwendet, die wasserlöslich oder in Wasser dispergierbar sind. Beispiele hierfür sind Homopolymerisate oder Mischpolymerisate des Vinylpyrrolidons, Polymerisate der Acrylsäure, Polyvinylalkohole und Celluloseäther. Daneben werden auch die sogenannten Pickering-Dispergatoren eingesetzt. Es handelt sich dabei um wasserunlösliche anorganische Verbindungen, die beispielsweise in Houben-Weyl, Band XIV/1 (1961), Seite 420 ff beschrieben sind. Beispiele für derartige anorganische Verbindungen sind schwerlösliche Erdalkali-Phosphate, -Carbonate, -Sulfate und -Silikate. Die Verwendung von Phosphaten, insbesondere des Calciums, ist am gebräuchlichsten. Diese anorganischen Verbindungen werden in der Regel in Kombination mit kleinen Mengen echter Emulgatoren oder Tenside eingesetzt (Houben-Weyl, Band XIV/1, Seite 425).

Die in diesen Systemen eingesetzten Tenside werden auch als Streckmittel bezeichnet, die zusammen mit den schwerlöslichen anorganischen Verbindungen eine stabile Suspension der polymerisierenden Monomertröpfchen in der wäßrigen Phase erzeugen. Bekannt sind auch eine Reihe anderer als Streckmittel wirksamer Verbindungen, beispielsweise wasserlösliche Persulfate oder Natriumbisulfit.

Die Anwendung anorganischer Suspensionsstabilisatoren, insbesondere in Verbindung mit Streckmitteln, ist im technischen Maßstab nur dann ohne nennenswerte Schwierigkeiten möglich, wenn die monomeren in Abwesenheit von darin gelösten Styrol-Suspensionspolymerisaten aus vorausgegangenen Ansätzen polymerisiert werden. Bei Untersuchungen mit Calciumphosphaten als Suspensionsstabilisatoren wurde beobachtet, daß instabile, koagulationsanfällige Systeme gebildet werden, wenn solche Polymerisate in der organischen Phase gelöst worden sind.

Die Wiederverwendung von Styrol-Suspensionspolymerisaten aus vorhergehenden Polymerisationsansätzen, insbesondere von ausgesiebten Perlanteilen mit zu hohem und zu niedrigem Teilchendurchmesser, den sogenannten Randfraktionen, ist aber aus Gründen der Rohstoffersparnis und aus ökonomischen Gründen wünschenswert. Deshalb hätte ein Suspensionspolymerisationsverfahren ohne diese Möglichkeit eine nur eingeschränkte Bedeutung.

Der vorliegenden Erfindung lag also die Aufgabe zugrunde, ein Verfahren zu entwickeln, bei dem die Randfraktionen, unabhängig von ihrer Perlgröße, durch Auflösen in den Monomeren in den Prozeß zurückgeführt werden können, ohne daß dies zur Instabilität oder anderen Nachteilen im Verfahrensablauf führt. Bei der Untersuchung dieses Problems wurde festgestellt, daß das in den rückgeführten Perlen enthaltene Calciumphosphat ursächlich ist für die Instabilität des Systems. Diese Instabilität nimmt mit abnehmender Teilchengröße der in der organischen Phase gelösten perlförmigen Polymerteilchen zu, insbesondere bei Polymerisatperlen, deren Durchmesser unterhalb von etwa 0,4 mm liegt. Besonders ausgeprägt ist diese Erscheinung, wenn aus dem Abwasser der Suspensionsstabilisation abgetrennte Polymerisatteilchen, — das sogenannte Dekantermaterial —, deren Teilchendurchmesser größtenteils unterhalb 0,2 mm liegt, verwendet werden. Dieser Befund korrespondiert mit der Feststellung, daß z. B. der Calciumphosphatanteil in den Suspensionspolymerisaten mit abnehmendem Teilchendurchmesser zunimmt und beim Dekantermaterial am höchsten ist. Bei dieser erläuternden Betrachtung wurde zugrundegelegt, daß Calciumphosphate als Suspensionsstabilisatoren eingesetzt worden waren.

Es erschien somit zweckmäßig, diese Produkte vorzubehandeln, um den überwiegend an der Perloberfläche lokalisierten Calciumphosphatanteil durch Säurebehandlung zu entfernen. Geeignet wäre hierfür beispielsweise eine Behandlung mit Salpetersäure, wobei entweder gegen Ende einer Suspensionspolymerisation dem Gesamtansatz Salpetersäure zugesetzt wird, oder aber das rückzuführende Material in einem separaten Verfahrensschritt mit Salpetersäure behandelt wird. Beide Methoden haben Nachteile. Im ersten — technisch weniger aufwendigen — Fall sind relativ große Säuremengen erforderlich, das gesamte Abwasser muß neutralisiert werden, was zu einer unerwünschten Salzfracht führt. Im zweiten Fall bleibt die Säurebehandlung zwar nur auf einen kleineren Teil der Produktmenge beschränkt, man benötigt aber eine zusätzliche Anlage, die relativ aufwendig ist, wenn die notwendigen Verfahrensschritte in Betracht gezogen werden : Säurebehandlung im Rührkessel, Abtrennung der Perlen (z. B. mit einer Siebzentrifuge), Neutralisation des Abwassers und der Perlen, Trocknung der Perlen. Beiden Verfahrensweisen ist gemeinsam, daß nur die Oberflächen der perlförmigen Polymerteilchen erfaßt werden ; es können somit nur die an der Oberfläche befindlichen, aus schwerlöslichen Metallphosphaten bestehenden Suspensionsstabilisatoren abgelöst werden, nicht dagegen der Anteil, der während der Suspensionspolymerisation inkludiert worden ist.

Diese beiden Methoden wurden bei der Entwicklung der Erfindung erprobt und auch für wirksam

2

befunden, sie sind jedoch nicht Gegenstand der vorliegenden Erfindung, da die angeführten Nachteile gravierend sind.

In der FR-A-1 036 207 ist ein Verfahren zur Polymerisation von Styrol in wäßriger Suspension beschrieben, bei dem als Suspensionsstabilisator feinteiliges Calciumphosphat, gegebenenfalls zusammen mit geringen Mengen Säure, zugesetzt wird.

Gegenstand der Erfindung ist ein Verfahren zur Herstellung von Homo- oder Copolymerisaten des Styrols durch Polymerisation von Monomeren, die Styrol-Suspensionspolymerisate gelöst enthalten, in wäßriger Suspension in Gegenwart von Suspensionsstabilisatoren, die aus schwerlöslichen Metallphosphaten bestehen. Erfindungsgemäß werden die im Auflösematerial enthaltenen schwerlöslichen Metallphosphate dadurch in die wäßrige Phase überführt, daß vor Beginn der Polymerisation die Monomerphase in einer wäßrigen Phase, welche eine Mineralsäure gelöst enthält, durch Rühren bei einer Temperatur zwischen 10 und 80 °C, vorzugsweise zwischen 20 und 50 °C, und einer Zeitdauer zwischen 5 und 120 min., vorzugsweise zwischen 20 und 60 min., dispergiert wird (extraktive Säurebehandlung). Daran anschließend wird das als Suspensionsstabilisator wirkende schwerlösliche Metallphosphat in der wäßrigen Phase gebildet.

In einer bevorzugten Ausführungsform wird als Mineralsäure Phosphorsäure verwendet und der Suspensionsstabilisator in der wäßrigen Phase durch Zusatz einer Metallverbindung und Ausfällen des schwerlöslichen Metallphosphats in situ gebildet. Die Bildung des schwerlöslichen Metallphosphats kann durch Zusatz der dazu erforderlichen Menge Alkalihydroxid bzw. Ammoniumhydroxid und des entsprechenden Anteils einer wasserlöslichen Metallverbindung oder durch Zusatz einer entsprechenden Menge eines Metalloxids, -hydroxids oder carbonats vorgenommen werden. Das erfindungsgemäße Verfahren kann auch in der Weise ausgeführt werden, daß schwerlösliche Metallphosphate kombiniert erzeugt werden, wobei ein Teil der Gesamtmenge auf der Basis von Phosphorsäure auf die zuvor beschriebene Weise hergestellt wird, der Restanteil jedoch auf die übliche Art, beispielsweise aus Trinatriumphosphat und Calciumchlorid erzeugt wird, oder in Form eines geeigneten vorgefertigten Calciumphosphates zugesetzt wird. Eine auch praktikable Variante des erfindungsgemäßen Verfahrens besteht darin, den Verfahrensschritt der extraktiven Säurebehandlung nicht mit Phosphorsäure, sondern mit einer anderen Calciumphosphate lösenden Mineralsäure vorzunehmen, und nach der Neutralisation der Säure die schwerlöslichen Metallphophate wie üblich, z. B. aus wasserlöslichen Phosphaten und Metallverbindungen direkt in der wäßrigen Phase herzustellen.

Die Menge der anzuwendenden Mineralsäure kann innerhalb weiter Grenzen variiert und einzelnen Anwendungsfällen angepaßt werden. Die Säuremenge beträgt vorzugsweise 0,015-0,4, insbesondere 0,04-0,2 Gew.%, bezogen auf die Suspension. Die Suspension enthält dann 0,005 bis 1, vorzugsweise 0,1 bis 0,5 Gew.% an Suspensionsstabilisator.

Die Anwendung des erfindungsgemäßen Verfahrens kann in Kombination mit bekannten Verfahrensvarianten der Suspensionspolymerisation ausgeführt werden. Üblicherweise werden sogenannte Streckmittel als Costabilisatoren eingesetzt. Diese sind in der Regel Emulgatoren oder Tenside, von denen beispielhaft folgende erwähnt werden : Dodecylsulfon-säure Natrium, Natriumoctylsulfat, Dioctylester der Natriumsulfobernsteinsäure, Alkalilaurylsulfate oder Alkalisalze von Fettsäuren. Beispiele für andere Streckmittel sind geringe Mengen Polymerisatdispersionen (DE-OS-2 609 104), wasserlösliche Persulfate (US-PS-2 652 393) oder Natriumbisulfit (DE-OS-1 770 411).

Die Suspensionsstabilisatoren sind schwerlösliche Metallphosphate, wie z. B. Phosphate des Calciums, Bariums, Strontiums, Magnesiums, Aluminiums, Eisens oder Kobalts. Gegebenenfalls ist auch eine Kombination unter diesen und/oder mit untergeordneten Anteilen anderer schwerlöslicher Verbindungen wie Hydroxiden, Oxiden, Carbonaten, Silikaten oder Sulfaten in Betracht zu ziehen.

Bevorzugt sind schwerlösliche Phosphate zweiwertiger Metalle, insbesondere Calciumphosphate. Bei den schwerlöslichen Phosphatverbindungen kommen bevorzugt Salze mit 3 Basenäquivalenten in Frage, oder Mischungen aus Produkten mit mehr als 3 Basenäquivalenten und solchen mit weniger als 3 Basenäquivalenten. Beispiele für bevorzugte Phosphatverbindungen sind Tricalciumphosphat, Hydroxylapatit oder andere Phosphate mit Apatitgitter-Struktur.

Die Teilchengrößen der schwerlöslichen Metallverbindungen können je nach Herstellweise und nach ihrer Form in weiten Grenzen zwischen 0,01 und 100 μm schwanken ; im Falle der Hydroxylapatite liegt die bevorzugte Teilchengröße überwiegend zwischen 0,01 und 0,1 μm.

Das erfindungsgemäße Verfahren eignet sich für die Herstellung von Homopolymerisaten des Styrols sowie für die Copolymerisation von Monomergemischen, die mindestens 50 Gew.% Styrol enthalten. Als Comonomere kommen Acrylnitril, Ester der (Meth-)Acrylsäure mit Alkoholen mit 1 bis 8 Kohlenstoffatomen, N-Vinylverbindungen, wie Vinylcarbazol, oder auch geringe Mengen an Verbindungen, die zwei Doppelverbindungen enthalten, wie Butadien, Divinylbenzol oder Butandioldiacrylat in Frage. Die Monomeren enthalten Styrolpolymerisate aus vorhergehender Suspensionspolymerisation gelöst, vorzugsweise in Mengen von 2 bis 10 Gew.%.

Bei dem erfindungsgemäßen Verfahren fallen die Polymerisate in Form feiner Perlen an. Führt man die Suspensionspolymerisation in Gegenwart eines flüchtigen organischen Treibmittels aus, so werden expandierbare Perlpolymerisate erhalten. Man kann das Treibmittel zu der Suspension vor, während oder nach der Polymerisation zusetzen. Als Treibmittel sind unter Normalbedingungen gasförmige oder flüssige Kohlenwasserstoffe geeignet, die das Styrolpolymerisat nicht lösen, und deren Siedepunkte unterhalb des Erweichungspunktes des Polymerisates liegen.

Beispiele für bevorzugte Treibmittel sind Propan, Butan, Pentan, Cyclopentan, Hexan, Cyclohexan und halogenierte Kohlenwasserstoffe, wie Methylchlorid, Dichlordifluormethan oder Trifluorchlormethan, sowie deren Mischungen. Meistens verwendet man die Treibmittel in Mengen von 3 bis 12 Gew.%, bezogen auf die Monomeren.

Zum Starten der Polymerisation werden organische Polymerisationsinitiatoren verwendet, die unter dem Einfluß von Wärme in polymerisationsauslösende Radikale zerfallen. Gebräuchlich sind z. B. Peroxide, wie Benzoylperoxid, Lauroylperoxid, tert.-Butylperbenzoat, tert.-Butylperoctoat, tert.-Butylperpivalat oder instabile Azoverbindungen wie Azodiisobutyronitril. Die Initiatoren werden im allgemeinen in Mengen von 0,01 bis 1 Gew.%, bezogen auf die Monomeren, eingesetzt. Die Art des zu verwendenden Initiators richtet sich nach der vorgesehenen Polymerisationstemperatur. Besonders vorteilhaft ist es, Mischungen von Initiatoren zu verwenden, wobei die Polymerisationstemperatur auf die entsprechende Halbwertszeit des Initiators abgestimmt werden kann. Die Polymerisationstemperatur liegt in der Regel zwischen 60 und 150 °C, vorzugsweise zwischen 80 und 120 °C.

Besonders bei expandierbaren Polystyrolperlen sind die Verarbeitungseigenschaften in starkem Maße von der Zellstruktur abhängig. Eine Steuerung der Zellstruktur, die z. B. durch Angabe der Zahl der Zellen pro mm$^3$ charakterisierbar ist, gelingt durch Verwendung üblicher zellregulierender Substanzen.

Zur Herstellung flammwidriger Styrolpolymerisate sind Flammschutzmittel erforderlich, die häufig schon im Reaktionsgemisch der Suspensionspolymerisation zugesetzt werden. Hierfür sind insbesondere organische Halogenverbindungen, vorzugsweise bromierte organische Verbindungen geeignet. Beispiele sind Hexabromcyclododecan oder Tris (dibrompropyl)-phosphat. Als weitere Komponenten können im Polymerisationsansatz organische oder anorganische Füllstoffe, Antistatika oder Weichmacher enthalten sein.

## Beispiele

A) Die organische Phase der nachfolgend beschriebenen Beispiele enthält, bezogen auf 100 Teile (Gew.-Teile) Monomere, 6 Teile feinteiliges Auflösematerial aus einer vorausgegangenen Suspensionspolymerisation, ferner Dibenzoylperoxid und t-Butylperbenzoat als Polymerisationsinitiatoren.

B) Die wäßrige Phase der Suspensionspolymerisation besteht aus 100 Teilen Wasser und darin enthaltenen anorganischen Suspensionstabilisatoren, deren Herstellung in den einzelnen Beispielen beschrieben ist.

C) Die Suspensionspolymerisation der gemischten Phasen A und B wird auf übliche Weise in Gegenwart von Alkylnatriumsulfonat als Streckmittel und Pentan als Treibmittel bei Temperaturen von 85 °C bis 115 °C durchgeführt.

D) Die verschiedenen Arten der extraktiven Säurebehandlung der feinteiliges Auflösematerial enthaltenden organischen Phasen sind in den Beispielen erläutert.

E) Vergleichsversuch

## Beispiel 1

$A_1$ : 100 Gew.-Teile Styrol
Siebanalyse des Auflösematerials

| Ø mm | > 0,4 | 0,31 | 0,2 | < 0,2 |
|------|-------|------|-----|-------|
| % | 5 | 72 | 17 | 6 |

$B_1$ : 100 Gew.-Teile Wasser
$D_1$ : Der Suspension aus $A_1$ und $B_1$ werden 1,19 Gew.-Teile 3 N Phosphorsäure zugefügt. Die Suspension wird 30 min bei Raumtemperatur gerührt. Anschließend werden 1,19 Gew.-Teile 3 N Natronlauge und nachfolgend 1,10 Gew.-Teile einer 20 %igen Calciumchloridlösung hinzugefügt. Dann wird die Suspensionspolymerisation C eingeleitet. Es entsteht ein schäumfähiges Perlgranulat.

## Beispiel 2

$A_2$
$B_2$ wie Beispiel 1
$D_2$ : wie $D_1$, anstelle von Natronlauge und Calciumchloridlösung werden jedoch 0,55 Gew.-Teile einer 20 %igen Calciumhydroxidlösung hinzugefügt.

## Beispiel 3 (Magnesiumphosphat als Suspensionsstabilisator)

$A_3$
$B_3$ wie Beispiel 1
$D_3$ : wie $D_1$, anstelle von Calciumchlorid werden jedoch 0,94 Gew.-Teile einer 20 %igen Magnesiumchloridlösung hinzugefügt.

4

# 0 068 298

Beispiel 4 (Extraktive Säurebehandlung mit Schwefelsäure im Suspensionsansatz)

$A_4$
$B_4$ wie Beispiel 1

$D_4$ : analog $D_1$. Anstelle von Phosphorsäure werden 1,88 Gew.-Teile 2 N Schwefelsäure hinzugefügt. Nach 45 min Rühren bei Raumtemperatur wird die Schwefelsäure durch Zugabe von Natronlauge neutralisiert. Dann werden 1,96 Gew.-Teile einer 10 %igen $Na_3PO_4$-Lösung und nachfolgend 1,47 Gew.-Teile einer 20 %igen Calciumchloridlösung zugesetzt.

Beispiel 5 (Extraktive Säurebehandlung mit Salzsäure im Suspensionsansatz)

$A_5$
$B_5$ wie Beispiel 2

$D_5$ : wie $D_1$, anstelle von Schwefelsäure werden jedoch 1,4 Gew.-Teile 1 N Salzsäure hinzugefügt.

E) Beispiel 6 (Vergleichsversuch ohne extraktive Säurebehandlung)

Die organische Phase hat die unter A beschriebene Zusammensetzung. Die wäßrige Phase besteht aus 100 Gew.-Teilen Wasser, der Calciumphosphat-Suspensionsstabilisator wird durch Zugabe von 1,96 Gew.-Teilen einer 10 %igen $Na_3PO_4$-Lösung und nachfolgend von 1,47 Gew.-Teilen einer 20 %igen Calciumchloridlösung hergestellt. Die weiteren Versuchsbedingungen sind unter C beschrieben. Es konnten keine stabilen Ansätze erhalten werden. Zwischen 1 und 2,5 Stunden (ab Erreichen von 80 °C) trat Koagulation der Ansätze ein.

**Patentansprüche**

1. Verfahren zur Herstellung von Homo- oder Copolymerisaten des Styrols durch Suspensionspolymerisation von Monomeren, die ganz oder überwiegend aus Styrol bestehen und Styrol-Suspensionspolymerisate gelöst enthalten, in Gegenwart von schwerlöslichen Metallphosphaten als Suspensionsstabilisatoren, dadurch gekennzeichnet, daß vor Beginn der Polymerisation die Monomerphase in einer wäßrigen Phase, die eine Mineralsäure gelöst enthält, durch Rühren bei einer Temperatur zwischen 10 und 80 °C und einer Zeitdauer zwischen 15 und 120 min dispergiert wird, und daran anschließend schwerlösliches Metallphosphat in der wäßrigen Phase durch Ausfällen gebildet wird.

2. Verfahren nach Anspruch 1, dadurch gekennzeichnet, daß das schwerlösliche Metallphosphat in der wäßrigen Suspension in einer Menge von 0,005 bis 1 Gew.% enthalten ist.

3. Verfahren nach Anspruch 2, dadurch gekennzeichnet, daß das schwerlösliche Metallphosphat ein Calciumphosphat ist.

4. Verfahren nach Anspruch 1, dadurch gekennzeichnet, daß die wäßrige Phase Phosphorsäure als Mineralsäure enthält, und daß der Suspensionsstabilisator in der wäßrigen Phase durch Zusatz einer Metallverbindung und Ausfällen des schwerlöslichen Metallphosphats in situ gebildet wird.

5. Verfahren nach Anspruch 1, dadurch gekennzeichnet, daß ein Streckmittel mitverwendet wird.

6. Verfahren zur Herstellung expandierbarer Styrolpolymerisate nach Anspruch 1, dadurch gekennzeichnet, daß der Suspension vor, während oder nach der Polymerisation ein flüchtiges organisches Treibmittel zugesetzt wird.

**Claims**

1. A process for the preparation of styrene homopolymers or copolymers by suspension polymerization of monomers which consist entirely or predominantly of styrene and contain dissolved styrene suspension polymers, in the presence of sparingly soluble metal phosphates as suspension stabilizers, wherein, before the polymerization is started, the monomer phase is dispersed in an aqueous phase, containing a dissolved mineral acid, by stirring at from 10 to 80 °C for from 15 to 120 minutes, after which sparingly soluble metal phosphate is formed in the aqueous phase by precipitation.

2. A process as claimed in claim 1, wherein the sparingly soluble metal phosphate is present in the aqueous suspension in an amount of from 0.005 to 1 % by weight.

3. A process as claimed in claim 2, wherein the sparingly soluble metal phosphate is a calcium phosphate.

4. A process as claimed in claim 1, wherein the aqueous phase contains phosphoric acid as the mineral acid, and the suspension stabilizer is formed in situ in the aqueous phase by adding a metal compound and precipitating the sparingly soluble metal phosphate.

5. A process as claimed in claim 1, wherein an extender is also used.

6. A process as claimed in claim 1, for the preparation of expandable styrene polymers, wherein a volatile organic blowing agent is added to the suspension before, during or after polymerization.

5

**Revendications**

1. Procédé de préparation d'homo- ou de copolymères styréniques par une polymérisation en suspension de monomères constitués exclusivement ou de façon prépondérante de styrène et contenant des polymérisats styréniques préparés en suspension à l'état dissous, en présence de phosphates de métaux peu solubles comme agents de stabilisation de la supension, caractérisé en ce que la phase du ou des monomères est dispersée, avant le début de la polymérisation, par une agitation de 15 à 120 minutes entre 10 et 80 °C dans une phase aqueuse, contenant un acide minéral à l'état dissous, un phosphate d'un métal peu soluble étant ensuite formé dans cette phase aqueuse par précipitation.

2. Procédé suivant la revendication 1, caractérisé en ce que la teneur de la suspension aqueuse en phosphate de métal peu soluble est comprise entre 0,005 et 1 % en poids.

3. Procédé suivant la revendication 2, caractérisé en ce que le phosphate de métal peu soluble est un phosphate de calcium.

4. Procédé suivant la revendication 1, caractérisé en ce que la phase aqueuse contient comme acide minéral de l'acide phosphorique et l'agent de stabilisation de la suspension est formé in situ dans la phase aqueuse par l'addition d'un dérivé d'un métal et précipitation d'un phosphate de métal peu soluble.

5. Procédé suivant la revendication 1, caractérisé en ce que l'on emploie aussi un diluant ou extendeur.

6. Procédé de préparation de polymères styréniques suivant la revendication 1 expansibles, caractérisé en ce que l'on incorpore à la suspension avant, pendant ou après la polymérisation, un agent d'expansion organique volatil.